# EUROPEAN PATENT SPECIFICATION

(11) **EP 0 729 305 B1**
(45) Date of publication and mention of the grant of the patent: **09.06.1999**
(21) Application number: 95900880.6
(22) Date of filing: 18.11.1994
(51) Int. Cl.: A23N 5/00

(54) **SKIN REMOVAL PROCESS AND APPARATUS**
ABRINDENVERFAHREN UND -VORRICHTUNG
PROCEDE ET DISPOSITIF SERVANT A ENLEVER LA PEAU DE GRAINES OU DE NOIX

(30) Priority: 19.11.1993 GB 9323844
(43) Date of publication of application: 04.09.1996
(73) Proprietor: JAMES FOXDALE LTD., Hoylake, Wirral L47 3BW (GB)
(72) Inventor: PRENDIVILLE, John Edward L., London SW1P 1PD 1PD (GB)
(74) Representative: Piésold, Alexander J.
(86) International application number: GB9402539
(87) International publication number: WO9513711

(56) References cited:
- FR-A- 2 638 948
- FR-A- 2 663 512
- US-A- 4 537 122
- US-A- 4 738 860

## Description

The present invention relates to a process and apparatus for removing the skins from products such as nut kernels, beans, seeds or the like, according to the preambles of claims 1 and 9 respectively. Such a process and apparatus is known from US-A-4738860.

Various other devices employing different techniques are known for removing the skins from such products.

With particular reference to nut kernels, devices are known which scrub, brush or scrape the nut kernels, or use other abrasive type treatments to remove the nut kernel skins. In certain cases, 40% of the treated products still have their skins adhered thereto. It is then necessary electro-optically or manually to sort the products and retreat those on which the skins remain.

In most cases, prior to employing the above skin removing processes, the nuts are pre-treated to loosen the skins for their more efficient removal. Typically pre-treatment involves soaking the nut kernels in water or a suitable aqueous solution. Alternatively the pre-treatment may take the form of roasting the kernels or heating them in hot air, steam, water or an aqueous solution.

The speed and efficiency at which nuts can be processed in these known methods of skinning is reduced by the additional pre-treatment process steps involved. Although necessary in order to attain skinned nuts of the required quality, these pre-treatment steps are thus undesirable since they add time to the skinning operation as a whole. The apparatus required for such pre-treatments moreover usually involve considerable extra plant investment costs and maintenance costs.

Particular forms of pre-treatment also have their particular associated problems. For example, with treatments that involve a nut kernel being heated, the heat so applied can cause damage to the kernel's cell structure, rendering it unusable. Also, when heating the nut kernel has only been partially successful in loosening the kernel skin, reheating is not desirable due to the likelihood of damage.

Soaking forms of pre-treatment have the disadvantage that they are typically highly time consuming. In one known process for example, nut kernels are soaked in water or sodium hydroxide for about eight hours. Since all the nut kernels have to pass through the soaking step before they are skinned, the output of the skinning process will depend on the amount of nuts which can be soaked at any given time. Soaking in chemical solutions requires careful monitoring in order to ensure that the nut kernels are themselves not damaged by the action of the solution.

It has been proposed in US-A-4537122 to skin almond nuts by fluidising a bed of nuts with air. In this system, the nuts are first presoaked and washed to remove 90-95% of their skins and the remaining 5-10% is removed by the fluidising air. Thus several steps are involved.

It has been proposed in US-A-4300447 to skin peanuts by the abrasive action of a rotating cylinder in combination with jets of air. Again, in this proposal, it is preferred for the raw peanuts to be preconditioned by warm or hot air or hot water or aqueous solution. A significant proportion of the nuts may remain unskinned without such pre-treatment.

According to one aspect of the present invention there is provided a process of removing the skin from products such as nut kernels, beans, seeds or the like, the process comprising subjecting the products to a jet or jets of liquid so as to remove their skins, characterised by the characterising features of claim 1.

According to a second aspect of the present invention there is provided apparatus for removing the skin from products such as nut kernels, beans, seeds or the like, comprising means arranged to receive the products, and liquid jet means adapted to direct a jet or jets of liquid at the products so as to remove their skins, characterised by the characterising features of claim 9.

The action of the jet or jets of liquid loosens and removes the skins whilst in addition creating movement of the products which allows the skins to escape. The liquid can serve to carry away the removed skins. The time taken to remove the skins is considerably shorter than in known methods.

Preferably, the products are not pre-treated before being subjected to the jet or jets of liquid. Thus for example raw products, such as hazelnut kernels, may be subjected to the jet or jets of liquid. This saves expense and time in the production process. In particular, there is no need for preheating or presoaking and no use of chemicals or even water in a pre-treatment step or steps.

In the preferred embodiments, the liquid used is water, a readily and cheaply available product. The liquid is preferably pressurised at a pressure in the range of 240 kPa to 3500 kPa.

Preferably, no heat is used in the process; in other words, the liquid used is at ambient temperature. This saves on energy costs. Moreover, the cell structure of the product is unchanged, thereby making it possible to return for reprocessing any products with skin still adhering to their surface. However, in view of the efficiency of the skin removal process, it will generally be necessary to repeat the method on only a small proportion of the products, if any.

In a preferred process, the position of the supply of the jet or jets of liquid and a body of the products are moved relative to each other. This can ensure that all the products are directly sprayed by the jet or jets. Thus for example, the position of supply may be stationary and the body of products moved around, or both may be moved around. Preferably, the body of products is stationary and the position of the supply of the jet or jets is moved.

Preferably the spacing between the supply of the jet or jets of liquid and the body of products is adjustable. This may be advantageous if the same apparatus is to be used for different products.

In a preferred embodiment the jet or jets are provided vertically above the products and the relative movement occurs in a horizontal plane. There may be movement in first and second mutually perpendicular directions. The receiving means for the products to be skinned may comprise a cage. The apertures of the cage are preferably small enough to retain the products and large enough to allow the products' skins to escape from the cage. The liquid used to skin the products then carries the removed skins through the apertures in the cage. In general, the liquid and the skins will drain through the bottom of the cage. No additional processes to separate the skinned products and the skins are thus required.

A splash plate may be provided adjacent the cage to redirect liquid which has left the cage, back at the products. The plate is preferably positioned on a side of the cage opposite to that of the supply of the jet or jets and is arranged to extend substantially at right angles to the direction of flow of the jet or jets. Thus, for example, if the jet or jets are provided above the cage, then the splash plate will be below the cage. The splash plate helps to ensure the high efficiency of the process.

The inside faces of the cage may be provided with an abrasive surface, eg a mesh or gauze-like finish, to assist the skin removing process.

An embodiment of the present invention will now be described by way of example and with reference to the accompanying drawings, wherein:-
Figure 1 shows a front elevation of apparatus for removing the skin from products in accordance with an embodiment of the present invention;
Figure 2 shows an end elevation of the skinning apparatus;
Figure 3 shows a plan view of the skinning apparatus; and
Figure 4 shows in plan view a tray of cages suitable for use in the skinning apparatus, to a larger scale.

The skinning apparatus comprises a main frame 1 having four pairs of support legs 2, a platform 3 supported by the legs and receiving four product trays 30 made up of cages 4, and a centre frame 5 mounted between the two pairs of centrally positioned legs and supporting thereon a water supply mechanism 6. The water supply mechanism is arranged above a product processing area 40 defined centrally of the platform 3.

The frame and tray components are made from stainless steel for its anti-corrosive properties although alternative materials such as other suitable metals or plastics may be used.

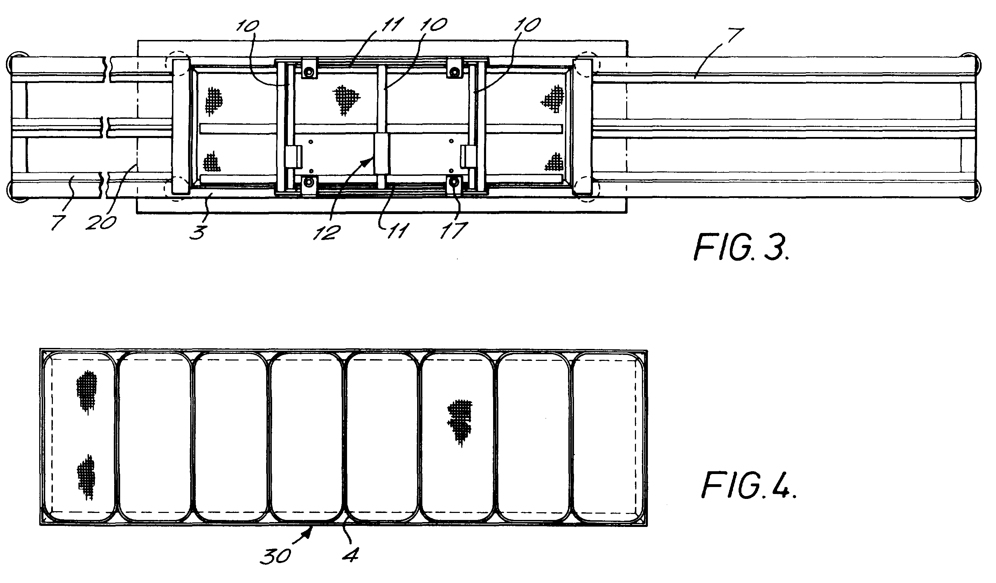

As seen in Figure 4, each product tray 30 comprises eight cages arranged in a row. Any suitable number of cages may be used, joined together or separate. Two pairs of product trays 30 are provided, the trays of each pair being arranged side by side. The trays are slidably received on rails 7 which extend along the length of the apparatus and which allow the trays to be moved into and out of the processing area 40 below the water supply mechanism 6 via both ends of the apparatus.

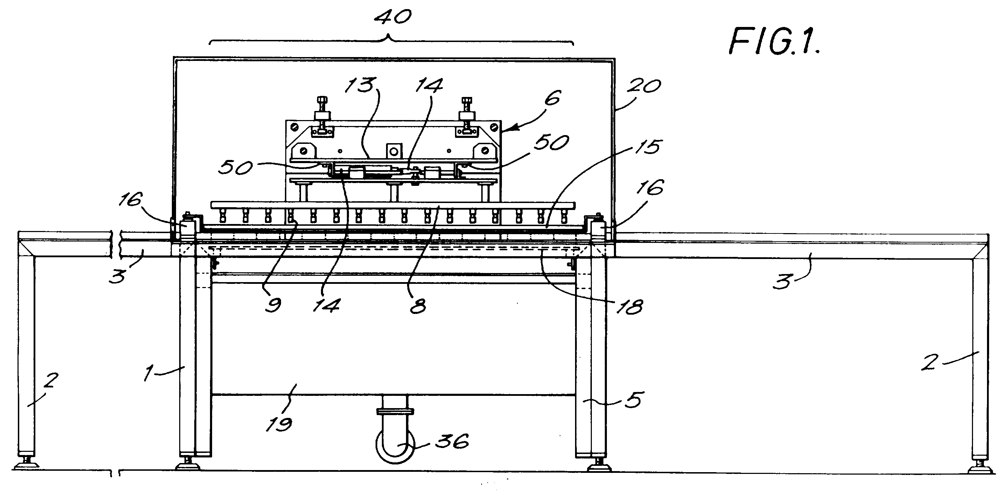

As shown in Figure 1, a lid 15 is provided for the trays, which extends along the trays when located in the processing area 40 and which can be lowered, by means of pneumatically driven pistons 16, into place on top of the cages 4 to prevent any products escaping from the top of the cages during the skinning process. The lid 15 is formed with holes to allow jets of water from the water supply mechanism 6 to reach the products.

The water supply mechanism 6 includes a manifold 8 which distributes water to sixteen pairs of laterally spaced nozzles 9. Each cage 4 is thus provided with a nozzle above it.

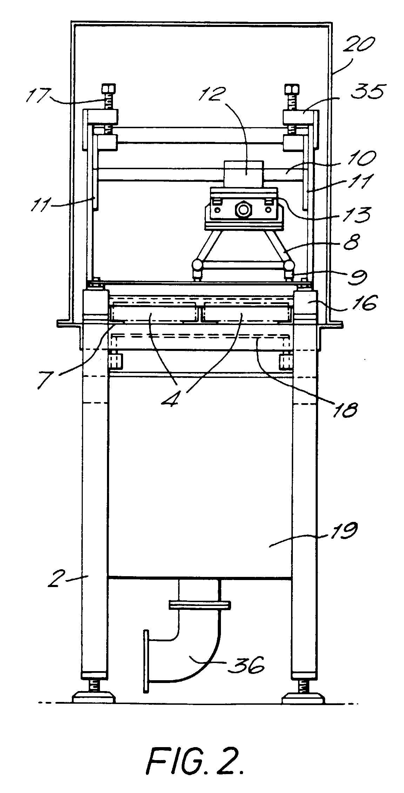

In order to achieve relative horizontal movement between the products held in cages 4 and the jets of water emanating from the nozzles 9, the manifold 8 is mounted for limited longitudinal and lateral movement. The water supply mechanism 6 is supported for lateral movement across the apparatus on three lateral shafts 10 provided between frame members 11 of the centre frame 5, as shown in Figures 2 and 3. The movement is controlled by attaching a pneumatically driven piston/cylinder arrangement 12 between the water supply mechanism 6 and the frame members 11. The piston/cylinder arrangement 12 can thus be operated to move the water supply mechanism 6, and thus the manifold 8, across the apparatus as required.

A similar arrangement is used to move the manifold 8 longitudinally of the apparatus. The water supply mechanism 6 has a longitudinal plate member 13 which is supported by the lateral shafts 10 and from which a pair of longitudinally spaced brackets 50 depend. A pneumatically driven piston/cylinder arrangement 14 extends between the brackets and carries the manifold 8 for longitudinal movement on the water supply mechanism 6.

Alternative arrangements for creating the required movement of the manifold, such as rack and pinion or worm screw devices, may be employed. The relative movement of the cages 4 and nozzles 9 need not result from movement merely of the manifold. The nozzles may be kept stationary and the cages moved, or both may be moved.

A height adjustment mechanism 35 is provided at the top of centre frame 5. This includes threaded bolts 17 rotation of which causes vertical movement of frame members 11 relative to the main body of the centre frame 5. Thus the height of the water supply mechanism is adjustable, whereby the pressure and the area covered by the jets on contact with the products can be altered. The pressure of the jets may be altered at the pressure source, which may be a pump (not shown).

As shown in Figures 1 and 2, a splash plate 18 is positioned below the cages 4 and faces the nozzles 9. It acts to redirect water which has passed through the cages back at the products. The water redirected in this manner results in a secondary skinning action of the products helping to ensure a high efficiency of the process. The splash plate is preferably positioned at a slight incline, such that skins that have been removed can drain away. The splash plate may be grooved or have ridges or apertures or other suitable configurations in order to assist such drainage.

A collecting chamber 19 is located below the product processing area 40 to receive the water and removed skins from the splash plate 18. The collecting chamber has an outlet 36.

A cover 20 encloses the processing area 40 of the apparatus, ensuring safe and clean operating conditions around the machine. The cover is readily removable for easy maintenance of the working parts of the apparatus and may be formed entirely of hardened glass or plastics or of other suitable materials with perhaps viewing ports.

The use of the apparatus will now be described. Each cage 4 is filled, by any suitable method, to approximately two thirds of its capacity. The trays 30 are then slid into the processing area 40 below the array of nozzles 9. With the trays in position, the lid 15 is lowered into position by operation of the pistons 16. Water is sprayed under pressure directly at the products, whilst at the same time the manifold 8 is moved laterally and longitudinally by operation of the respective piston/cylinder arrangements 12 and 14. Any suitable liquid may be used, although the availability and low cost of water makes it a good choice.

The action of the pressurised water directly loosens and removes the skins from the products whilst in addition creating movement of the products allowing their skins to escape through the apertures in the cages 4. The movement of the manifold 8 is such as to direct the nozzles' jets along a path whereby substantially all the products are acted upon by the pressurised water. The path followed by the nozzles may be adjusted to suit requirements. The water is preferably pressurised at a pressure in the range of 240 kPa to 3500 kPa, depending on the product being processed.

In trials of the process according to the preferred embodiments, it has been found that with unskinned hazelnuts as products 99% of the nuts are skinned completely after 90 seconds of spraying with jets of water at 1050 kPa.

The process according to the preferred embodiments of the present invention thus achieves products which are reliably and efficiently skinned without the use of pre-treatment processes or processes for separating the skinned products and their skins.

## Claims

1. A process of removing the skin from products such as nut kernels, beans, seeds or the like, the process comprising receiving a plurality of the products in a body thereof with the products in contact with each other, and subjecting the products to a jet or jets of liquid so as to remove their skins, characterised in that the liquid serves to carry the skins removed from the products away from the skinned products.

2. A process as claimed in claim 1, wherein the products are not pre-treated before being subjected to the jet or jets of liquid.

3. A process as claimed in claim 1 or 2, wherein the liquid used is water.

4. A process as claimed in claim 1, 2 or 3, wherein the water is pressurised at a pressure in the range of 240 kPa to 3500 kPa.

5. A process as claimed in any preceding claim, wherein the liquid used is at ambient temperature.

6. A process as claimed in any preceding claim, wherein the position of the supply (9) of the jet or jets of liquid and the body of the products are moved relative to each other.

7. A process as claimed in claim 6, wherein the jet or jets are provided vertically above the products and the relative movement occurs in a horizontal plane.

8. A process as claimed in any preceding claim, wherein the products are received in a cage (4) having apertures small enough to retain the products and large enough to allow the products' skins to escape from the cage.

9. Apparatus for removing the skin from products such as nut kernels, beans, seeds or the like, comprising receiving means (4) arranged to receive a plurality of the products in a body thereof with the products in contact with each other, the receiving means having liquid outlet means, and liquid jet means adapted to direct a jet or jets of liquid at the products so as to remove their skins, characterised in that the liquid outlet means is arranged to allow escape of the skins removed from the products, whereby in use said skins are carried away from the skinned products by said liquid and via the liquid outlet means of the receiving means (4).

10. Apparatus as claimed in claim 9, wherein the spacing between the liquid jet supply means (9) and the body of the products is adjustable.

11. Apparatus as claimed in claim 9 or 10, wherein the receiving means (4) is movable from a product loading area to a skin removal area (40), a lid (15) for the receiving means being provided at the skin removal area (40).

12. Apparatus as claimed in claim 9, 10 or 11, wherein a splash plate (18) is provided adjacent the receiving means (4) to redirect liquid which has left the receiving means back at the products.

## Patentansprüche

1. Prozess zum Entfernen der Rinde von Produkten wie Nusskernen, Bohnen, Saatgut oder dergleichen, wobei der Prozess einschließt, eine Vielzahl von den Produkten in einem Körper davon zu empfangen, wobei die Produkte in Kontakt miteinander sind, und die Produkte einem Flüssigkeitsstrahl oder -strahlen auszusetzen, um ihre Rinden zu entfernen, dadurch gekennzeichnet, dass die Flüssigkeit dazu dient, die von den Produkten entfernten Rinden von den abgerindeten Produkten fortzutragen.

2. Prozess nach Anspruch 1, worin die Produkte nicht vorbehandelt werden, bevor sie dem Flüssigkeitsstrahl oder-strahlen ausgesetzt werden.

3. Prozess nach Anspruch 1 oder 2, worin die benutzte Flüssigkeit Wasser ist.

4. Prozess nach Anspruch 1, 2 oder 3, worin das Wasser mit einem Druck in dem Bereich von 240 kPa bis 3500 kPa unter Druck gesetzt ist.

5. Prozess nach einem vorhergehenden Anspruch, worin die benutzte Flüssigkeit Umgebungstemperatur hat.

6. Prozess nach einem vorhergehenden Anspruch, worin die Einstellung der Lieferung (9) des Flüssigkeitsstrahls oder -strahlen und der Körper der Produkte relativ zueinander bewegt werden.

7. Prozess nach Anspruch 6, worin der Strahl oder die Strahlen senkrecht über den Produkten geliefert sind und die relative Bewegung in einer waagerechten Ebene stattfindet.

8. Prozess nach einem vorhergehenden Anspruch, worin die Produkte in einem Käfig (4) mit Öffnungen empfangen werden, die klein genug sind, um die Produkte zurückzuhalten, und groß genug, um zu gestatten, dass die Rinden der Produkte aus dem Käfig ausströmen können.

9. Vorrichtung zum Entfernen der Rinde von Produkten wie Nusskernen, Bohnen, Saatgut oder dergleichen, die ein Empfangsmittel (4) umfasst, das angeordnet ist, um eine Vielzahl von den Produkten in einem Körper davon mit den Produkten in Kontakt miteinander zu empfangen, wobei das Empfangsmittel eine Flüssigkeitsauslassmittel hat, und ein Flüssigkeitsstrahlmittel, das einen Flüssigkeitsstrahl oder -strahlen auf die Produkte richten kann, um ihre Rinden zu entfernen, dadurch gekennzeichnet, dass das Flüssigkeitsauslassmittel angeordnet ist, um Ausströmung der von den Produkten entfernten Rinden zu gestatten, wobei die Rinden während der Benutzung von der Flüssigkeit von den abgerindeten Produkten und über das Flüssigkeitsauslassmittel des Empfangsmittels (4) fortgetragen werden.

10. Vorrichtung nach Anspruch 9, worin die Beabstandung zwischen dem Flüssigkeitsstrahllieferungsmittel (9) und dem Körper der Produkte eingestellt werden kann.

11. Vorrichtung nach Anspruch 9 oder 10, worin das Empfangsmittel (4) von einem Produktladegebiet zu einem Rindenentfernungsgebiet (40) bewegt werden kann, wobei an dem Rindenentfernungsgebiet (40) ein Deckel (15) für das Empfangsmittel geliefert ist.

12. Vorrichtung nach Anspruch 9, 10 oder 11, worin eine Schutzplatte (18) neben dem Empfangsmittel (4) geliefert ist, um Flüssigkeit, die das Empfangsmittel verlassen hat, wieder auf die Produkte zu richten.

## Revendications

1. Procédé permettant d'éliminer la peau de produits tels que les cerneaux de noix, grains, graines ou autres, le procédé prévoyant pour une pluralité de produits de les recevoir à partir de leurs corps respectifs en contact l'un avec l'autre, et de les soumettre à un ou plusieurs faisceaux de liquide de telle façon à enlever leurs peaux, caractérisé en ce que, le liquide sert à emporter les peaux enlevées des produits ainsi traités.

2. Procédé tel que revendiqué à la revendication 1, suivant lequel les produits ne sont pas pré-traités avant de les soumettre au traitement par le(s)dits faisceau(x) de liquide.

3. Procédé tel que revendiqué à la revendication l ou 2, suivant lequel le liquide utilisé est de l'eau.

4. Procédé tel que revendiqué à la revendication 1, 2 ou 3, suivant lequel l'eau est sous une pression de l'ordre de 240 à 3500 kPa.

5. Procédé selon l'une ou l'autre des revendications précédentes, suivant lequel le liquide est à température ambiante.

6. Procédé selon l'une ou l'autre des revendications précédentes, suivant lequel les positions d'amenée (9) du/des faisceau(x) de liquide et du corps des produits sont déplacées l'un par rapport à l'autre.

7. Procédé tel que revendiqué à la revendication 6, suivant lequel le/les faisceau(x) sont prévus en sens vertical au dessus des produits et le mouvement relatif se déroule dans un plan horizontal.

8. Procédé selon l'une ou l'autre des revendications précédentes, suivant lequel les produits sont recueillis dans une cage (4) ayant des orifices suffisamment petits pour retenir les produits et suffisamment grands pour permettre aux peux dos produits de s'échapper de la cage.

9. Appareil pour enlever la peau de produits tels que des cerneaux de noix, grains, graines ou autres, prévoyant des moyens de réception (4) agencés pour recevoir dans le corps une pluralité de produits en contact l'un avec l'autre, les moyens de réception ayant des moyens de décharge de liquide, et le faisceau de liquide agencé pour diriger le/les faisceaux de liquide vers les produits de telle façon à en éliminer leurs peaux, caractérisé en ce que, les moyens de décharge de liquide sont agencés pour permettre aux peaux enlevées de s'échapper des produits, suivant lequel en service lesdites peaux sont emportées et éliminées des produits traités au moyen dudit liquide et par l'intermédiaire de ladite décharge de liquide des moyens de réception (4).

10. Appareil tel que revendiqué à la revendication 9, selon lequel l'écart entre le moyen à faisceau d'apport de liquide (9) et le corps des produits est ajustable.

11. Appareil tel que revendiqué à la revendication 9 ou 10, selon lequel le moyen de réception (4) est amovible depuis une zone de charge de produit à une zone de dépose des peaux (40), un capot (15) pour le moyen de réception étant prévu étant prévu dans la zone de dépose des peaux (40).

12. Appareil tel que revendiqué à la revendication 9, 10 ou 11, selon lequel une plaque de protection (18) est prévue à proximité du moyen de réception (4) pour rediriger vers les produits le liquide quittant le moyen de réception.
